# EUROPEAN PATENT APPLICATION

(11) **EP 2 981 032 A1**
(43) Date of publication of application: **03.02.2016**
(21) Application number: 14306215.6
(22) Date of filing: 30.07.2014
(51) Int. Cl.: H04L 12/58

(54) **Messaging service export**

(71) Applicant: Thomson Licensing, 92130 Issy-les-Moulineaux (FR)
(72) Inventor: Roussel, Joris, 92443 Issy-les-Moulineaux cedex (FR); Chandrashekar, Jaideep, 92443 Issy-les-Moulineaux cedex (FR); May, Martin, 92443 Issy-les-Moulineaux cedex (FR); Northcutt, Jeffrey Duane, MENLO PARK, CA California 94025 (US)
(74) Representative: Browaeys, Jean-Philippe

(57) **Abstract**

Method of exporting a message intended for a user, from a providing device (6) to a rendering device (8), wherein the providing (6) and the rendering devices (8) are connected to a message pool manager (4), said method comprising :
- receiving by the message pool manager (4) said message from the providing device (6);
- storing said message in a message pool (9);
- transmitting said message from the message pool manager (4) to the rendering device (8) further to a request from the rendering device (8) when said rendering device (8) is in a perception range of the user.

## Description

### FIELD OF THE INVENTION

The present invention generally relates to the field of messaging services. These messaging services comprise delivering notifications of any kind to a user, such as for example SMS (Short Message Service), emails, incoming calls, alarms, etc.

More particularly, the invention deals with the export of a messaging service from a providing device to a rendering device.

Thus, the invention concerns a method of exporting a message from a providing device to a rendering device. It also concerns a message pool manager and a rendering device. It further concerns a computer program implementing the message export method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Nowadays, users are surrounded by an increasing number of connected devices delivering to them different kinds of information. These devices often generate messages, i.e. notifications and/or alerts, in order to alert the users about the availability of new information. However, a message, which may be important and/or urgent, can be easily missed by a user who is not in the range of the device.

At the same time, the user is surrounded by more and more user interfaces, screens, audio players and different kinds of output/input means, each of them trying to capture or keep the attention of said user. However, human beings still have limited attention capabilities. More, the home network is much bigger than the human perception range. These naturally unavoidable constraints lead to attention and physical/geographic limitations, which can be gathered together in the so called budget of attention. From that and depending of the end user context, notifications can be considered as useful, intrusive, disturbing or undeliverable, and then missed.

In order to avoid that users make too much effort to spread their attention area without any guarantee that they won't miss any message, some solutions exist.

Current existing solutions rely mainly on two approaches which are screen sharing and messaging service export to a remote server.

According to the first approach, two devices share their screens in order to enable the device which is closer to the user to deliver the message to the user by working as a remote screen replacing the screen of the device receiving the message.

This approach needs the devices to be connected and synchronous which necessitates a communication link between both devices and thus implies power consumption and reactivity constraints for both devices.

According to the second approach, the messaging service is exported to a relay server. Examples of solutions using this approach comprise MySMS (http://www.mysms.com/) or MightyText (http://mightytext.net/) for the export of SMS.

This approach has however some drawbacks. Indeed, the relay server requires a permanent, reliable and fault tolerant connection. Furthermore, this approach may generate a privacy issue as the relay server is generally a remote server located outside the user's home.

### SUMMARY OF THE INVENTION

The present invention proposes a solution for improving the situation.

Accordingly, the present invention provides a method of exporting a message intended for a user, from a providing device to a rendering device, wherein the providing and the rendering devices are connected to a message pool manager, said method comprising :
- receiving by the message pool manager said message from the providing device;
- storing said message in a message pool;
- transmitting said message from the message pool manager to the rendering device further to a request from the rendering device when said rendering device is in a perception range of the user.

Thus, with the present invention, it is possible to bring the information addressed to the user always closest to said user, thus ensuring a better user experience. The message pool manager has mainly a role of keeping the message intended for the providing device, which is not in the perception range of the user, until a rendering device, which is in the perception range of the user, requests said message in order to render it.

Advantageously, the reception of the message by the message pool manager and the transmission of said message to the rendering device are performed in an asynchronous manner.

This asynchronous running enables power saving as it is not necessary to maintain a connection between the providing and rendering devices in order to perform the export of the message.

Advantageously, the method comprises rendering the message on a user interface of said rendering device.

The manner of rendering the message depends on the rendering device capabilities. For instance, if the rendering device has a screen, it displays the message on the screen. If the rendering device has an audio player, the message will be presented as an audio message.

Thus, according to this preferred embodiment of the invention, only the data of the message are exported and not the entire user interface for rendering the message for which only the rendering device is responsible according to its characteristics and capabilities.

Preferably, the message is rendered at a time determined by said rendering device.

According to this embodiment, the rendering device is responsible for rendering the message at the best moment for the user. For example, if the rendering device is a connected TV or a set-top box, it may chose to render the message during a TV program break.

Advantageously, the message is rendered by the rendering device according to a display format determined by said rendering device.

For instance, depending on the design of the user interface of the rendering device, the message may be displayed in the form of a popup or of a panel or of an icon, etc.. It may also be rendered only as a text or as an audio or video message.

Advantageously, the method comprises removing, by the rendering device, after the rendering of the message, said message from the message pool.

This removal may be also performed by the message pool manager after transmission of the message to the rendering device.

Advantageously, the method comprises detecting, by the rendering device, that said rendering device is in the perception range of the user.

Preferably, it is after this detection that the rendering device requests the message from the message pool manager in order to render it.

According to an embodiment, the rendering device is in the perception range of the user if the user is using said rendering device.

The detection is advantageously performed by the rendering device using at least one sensor.

For instance, an embedded camera or a smart remote controller within the rendering device may be used for the detection of the user.

According to another example, proximity detectors such as near field sensors may be used for the detection.

According to an embodiment, the providing device is a mobile phone and the rendering device is a set-top box or a connected television.

The invention further provides a message pool manager operable to export a message intended for a user, from a providing device to a rendering device, wherein the providing and the rendering devices are connected to the message pool manager, said message pool manager comprising :
- a reception module operable to receive said message from the providing device;
- a storage module operable to store said message in a message pool;
- a transmission module operable to transmit said message from the message pool manager to the rendering device further to a request from the rendering device when said rendering device is in a perception range of the user.

According to an embodiment, the message pool manager is centralized in one device.

Such device is preferably a permanently connected device within the home, such as a home router or an internet gateway.

According to another embodiment, the message pool manager is distributed over a plurality of devices.

In this case, each of the plurality of devices hosts a part of the message pool. Furthermore, each of this plurality of devices may have the role of the providing or of the rendering device according to the situation and the proximity of the user with said devices.

The invention further provides a rendering device operable to render a message intended for a user, comprising :
- a detection module operable to detect that said rendering device is in a perception range of the user;
- a requesting module operable to request the message from a message pool manager storing said message in a message pool;
- a reception module operable to receive said message; and
- a rendering module operable to render the message.

Advantageously, the rendering device comprises an input module enabling the user to answer to the message.

Thus, not only the display of the message is exported but the messaging service itself as the user has the possibility to answer messages depending on the available input means in the rendering device next to said user.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

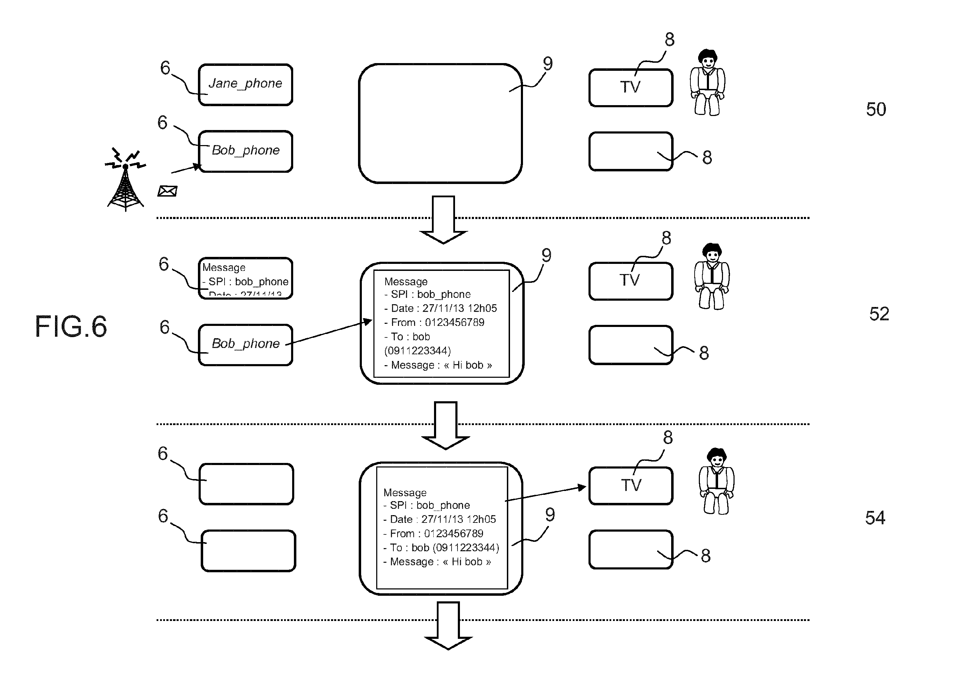

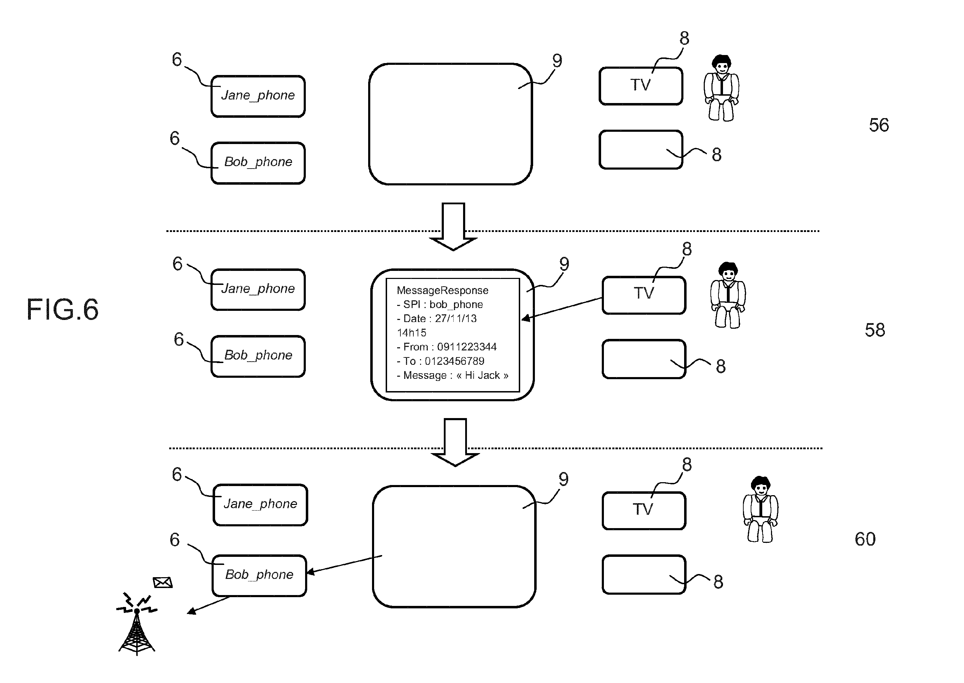

The invention thus provides a computer-readable program comprising computer-executable instructions to enable a computer to perform the message exporting method of the invention. The diagram of figure 6 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a system in which the method of the present invention is advantageously implemented, according to a first embodiment of the invention ;
- Figure 2 is a schematic view of a system in which the method of the present invention is advantageously implemented, according to a second embodiment of the invention;
- Figure 3 is a schematic view of the structure of a message pool manager according to an embodiment of the invention;
- Figure 4 shows an example of a message pool;
- Figure 5 is a schematic view of the structure of a rendering device according to an embodiment of the invention; and
- Figure 6 is a flowchart showing the steps of the message exporting method according to an embodiment of the present invention.

### DETAILED DESCRIPTION OF PREFERRED EMBODIMENTS

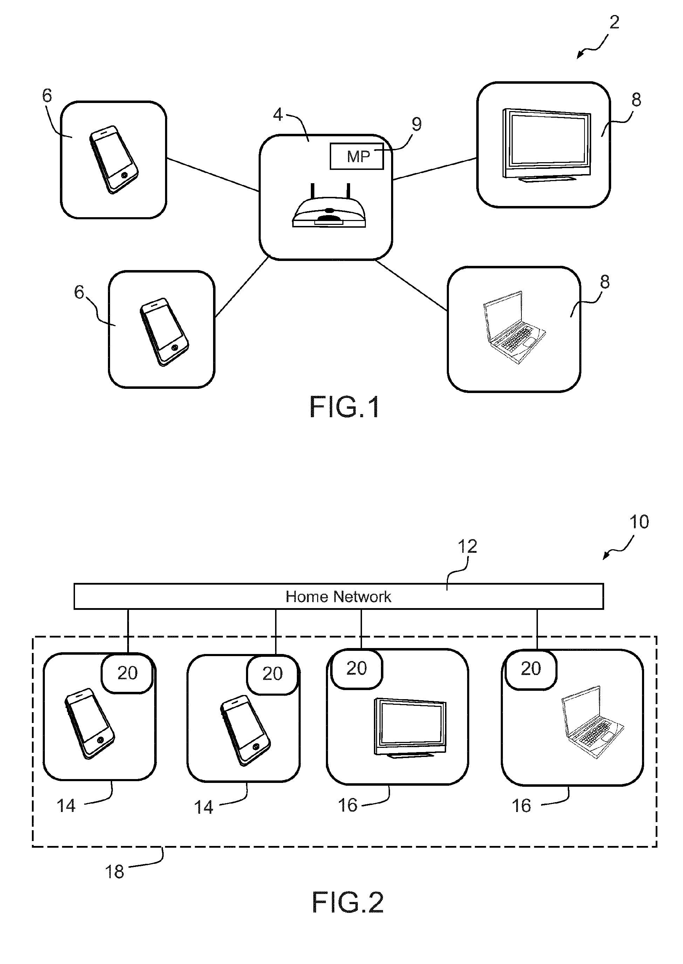

Referring to Figure 1, there is shown therein a schematic view of a centralized system 2 implementing a first embodiment of the present invention.

According to the first embodiment, the exporting service is managed in a centralized manner by a message pool manager 4 which can be a dedicated device for this service or a permanently connected device in the system 2.

The system 2 comprises for example a home network comprising a home router or an internet gateway to which are connected a plurality of devices.

According to the first embodiment of the invention, this home router or internet gateway plays the role of the message pool manager 4 and is operable to export a message intended for a first device 6, called here the providing device, to a second device 8, called here the rendering device.

The message pool manager 4 is operable to make available a message, which may be any kind of notification or SMS or email, received by the providing device 6, in order to be delivered or rendered by the rendering device 8 to the user. This is particularly advantageous when the providing device 6 is not in the range of perception of the user whereas the rendering device 8 is within this range of perception. By being in the range of perception of a device, it is meant that the user can physically perceive a notification issued by the device.

As shown in figure 1, the system 2 may comprise a plurality of providing devices 6 and a plurality of rendering devices 8. Thus, a message received by one of the providing devices 6 may be stored by the message pool manager 4 in a message pool 9 in order to be "picked" by one of the rendering devices 8 in the range of perception of the user, for instance the nearest rendering device 8 to the user.

For instance, the providing device 6 is a mobile phone or a tablet or a PC or a laptop, or any connected device able to receive a message intended for a user, such as a TV or a wearable device, whereas the rendering device 8 is a connected TV or a set-top box or a laptop or an alarm clock or any connected device able to render the message, such as a smart watch or a connected fridge.

Obviously, according to the circumstances, a providing device 6 may also have the role of a rendering device 8 and vice versa, mainly in function of the proximity of each of these devices to the user.

The providing device 6 and the rendering device 8 are connected to the message pool manager 4 through a wired network such as Ethernet or PLC (Power Line Carrier) and/or a wireless network such as Wifi or Bluetooth.

Referring now to Figure 2, there is shown therein a schematic view of a system 10 implementing a second embodiment of the present invention.

According to the second embodiment, the exporting service is managed in a distributed manner by the devices of the system 10.

The system 10 comprises for example a home network 12 to which are connected several devices 14, 16. By analogy with the first embodiment, the devices 14 are providing devices and the devices 16 are rendering devices.

The message pool manager 18 is then distributed over all these devices 14, 16, each of them hosting a part of a message pool 20.

According to this second embodiment, each device 14, 16 is able to subscribe to the message pool 20, read content and send/receive events. This can be achieved with well-known distributed computing techniques, such as UPnP, DDS, QeO, etc.

According to the second embodiment, a message, which may be any kind of notification or SMS or email, received by a providing device 14 is made available, preferably within said providing device 14 or in another connected device 14, 16 in order to be delivered or rendered by a rendering device 16 to the user. This is particularly advantageous when the providing device 14 is not in the range of perception of the user whereas the rendering device 16 is within this range of perception

As shown in figure 2, the system 10 may comprise a plurality of providing devices 14 and a plurality of rendering devices 16. Thus, a message received by one of the providing devices 14 may be "picked" by one of the rendering devices 16 in the range of perception of the user, for instance the nearest rendering device 16 to the user.

For instance, the providing device 14 is a mobile phone or a tablet or a PC or a laptop, or any connected device able to receive a message intended for a user whereas the rendering device 16 is a connected TV or a set-top box or a laptop or an alarm clock or any connected device able to render the message.

Obviously, according to the circumstances, a providing device 14 may also have the role of a rendering device 16 and vice versa, mainly in function of the proximity of each of these devices to the user.

The providing device 14 and the rendering device 16 are connected to the home network 12 through a wired link such as Ethernet or PLC (Power Line Carrier) and/or a wireless link such as Wifi or Bluetooth.

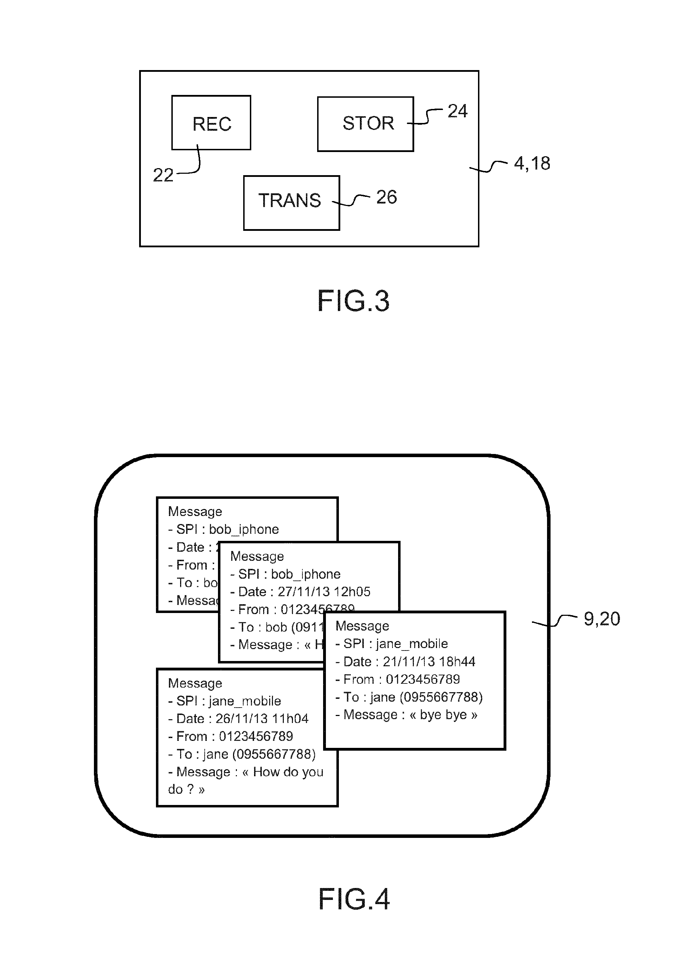

Figure 3 is a schematic view representing the structure of the message pool manager 4, 18 according to an embodiment of the present invention.

The message pool manager 4, 18 comprises a reception module 22 operable to receive a message from a providing device 6,14.

It also comprises a storage module 24 operable to store said message in the message pool 9, 20.

Figure 4 shows an example of message pool 9, 20 wherein each message comprises the following fields:
- the identity "SPI" (Service Provider Identifier) of the providing device 6,14. This identity can be of any kind of format, such as numeric, hexadecimal, ASCII. For instance, such identity may be "jane-mobile" or "bob_iphone";
- the message date "Date", for instance in the format dd/mm/yy followed by the exact time of sending the message;
- the sender "From" which may be for instance a phone number or an email address;
- the addressee "To", for instance designated by his/her name "jane" or "bob" and his/her phone number or email address;
- the content of the message "Message".

Optionally, other fields could favorably be added, such as the message type and/or the message priority and/or any other field which will bring some useful information about the message context to the user.

Furthermore, a message may be protected by a key in order to prevent non authorized rendering devices 8, 16 or users to access said message.

Returning to Figure 3, the message pool manager 4, 18 further comprises a transmission module 26 operable to transmit said message from the message pool manager 4, 18 to a rendering device 8, 16 further to a request from said rendering device 8, 16 when said rendering device 8, 16 is in a perception range of the user.

In the case of the first embodiment of Figure 1, the modules 22, 24, 26 of the message pool manager 4, are within one device which plays the role of the centralized message pool manager 4. All the messages of the message pool 9 are stored within a memory embedded or attached to said device.

In the case of the second embodiment of Figure 2, the modules 22, 24, 26 and the message pool 20 are distributed in the devices 14, 16. For instance, when a message is intended for a providing device 14 out of range of the user's perception, said message is advantageously received by the reception module 22 and stored by the storage module 24 in a message pool 20 within said providing device 14. Then, the transmission module 26 transmits said message to a rendering device 16 after a request received from said rendering device 16 located in the range of perception of the user.

Alternatively, this transmission could occur before if the rendering device 16 wants to cache the message before the user comes in the range of perception of said rendering device 16.

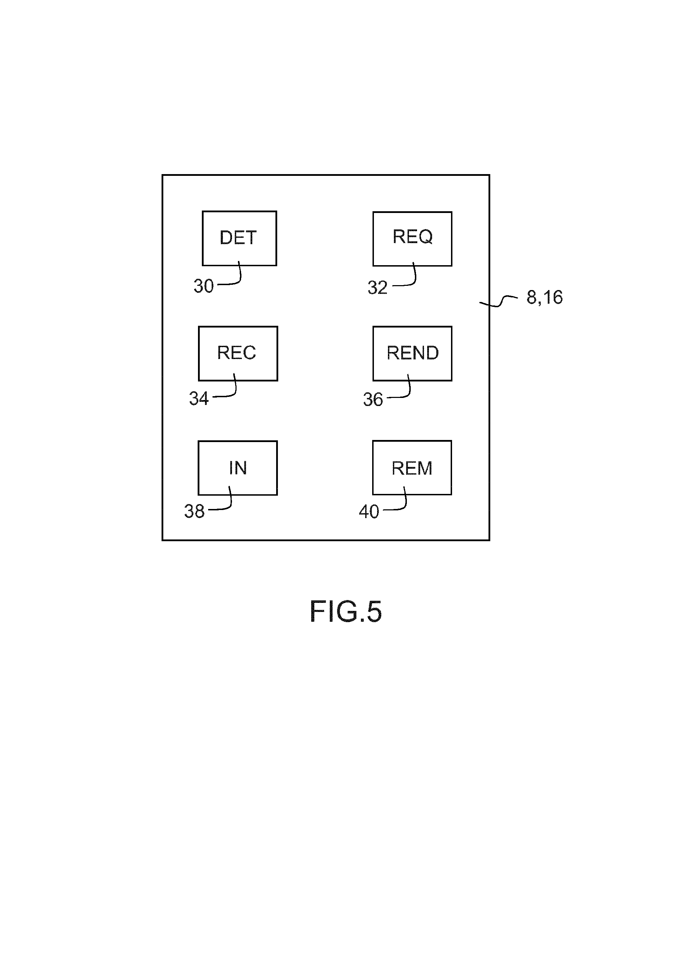

Figure 5 is a schematic view representing the structure of the rendering device 8, 16 according to an embodiment of the present invention.

The rendering device 8, 16 comprises a detection module 30 operable to detect that said rendering device 8, 16 is in the perception range of the user to whom the message is intended.

In order to detect if a user is in this range, the detection module 30 may consider if the user is using said rendering device 8, 16.

Advantageously, the detection module 30 comprises or is connected to at least one sensor able to detect the user presence, such as a camera or a smart remote controller.

The detection module 30 may also use a proximity detector such as a near field sensor, for example NFC, Bluetooth LE, iBeacon, etc.

The rendering device 8, 16 also comprises a requesting module 32 operable to request a message stored in the message pool 9, 20 from the message pool manager 4, 18.

The rendering device 8, 16 further comprises a reception module 34 operable to receive said message from the message pool manager 4, 18.

The rendering device 8, 16 also comprises a rendering module 36 operable to render the message.

The manner of rendering the message depends on the rendering module 36 capabilities. For instance, if the rendering module 36 comprises a screen, it displays the message on the screen. If the rendering module 36 has an audio player, the message will be presented as an audio message.

Furthermore, the rendering module 36 is able to determine the best time suitable for the rendering of the message to the user.

For example, if the rendering device 8, 16 is a connected TV or a set-top box, it may chose to render the message during a TV program break.

The rendering module 36 is also able to determine a suitable display format for delivering the message to the user.

For instance, the message may be displayed in the form of a popup or of a panel or of an icon, etc..

The rendering device 8, 16 further comprises an input module 38, for instance a keyboard or a remote control or a touch screen enabling the user to answer to the message.

The rendering device 8, 16 also comprises a removing module 40 able to remove the message from the message pool further to its rendering in order to prevent the rendering of the message from other rendering devices.

According to an embodiment, the service provider 6, 14 is notified about the message rendering completion and may decide to remove the message from its internal messaging service, such as for instance, the SMS notification bar.

Now, the details of an embodiment of the method of exporting messages will be described with reference to the flowchart of Figure 6.

Let's consider for an illustrative purpose the case of a centralized pool manager, i.e. the embodiment of Figure 1. The described steps below are of course identical in the case of a distributed pool manager.

As an example, the system 2 comprises two providing devices 6, for instance two mobile phones of two users Jane and Bob in the home : "Jane phone" and "Bob phone", and two rendering devices 8 : a TV and a laptop which may be used by both users Jane and Bob. The message pool manager 4 is for instance implemented in a home gateway.

Initially, the message pool 9 is empty and Bob is watching the TV 8. The detection module 30 of the TV 8 detects that Bob is using the TV 8 and thus that the TV 8 is in the range of perception of Bob.

At a first step 50, Bob's phone receives a message, for example an SMS.

As Bob is watching the TV 8 and does not want to be disturbed by the phone 6, the message is transmitted at step 52 from Bob's phone to the message pool manager 4 that stores it in the message pool 9.

At step 54, the message pool manager 4 notifies both rendering devices 8 about the arrival of a new message for the user Bob in the message pool 9.

The TV 8 which is in the range of perception of Bob requests the message from the message pool manager 4.

At step 56, after having received the message, the TV 8 displays the message, either immediately or during the next break of the TV program, for example. Bob reads the message and the removing module 40 of the TV 8 removes said message from the message pool 9.

At step 58, Bob answers the message using the input module 38, for example the remote control of the TV 8, and the TV 8 sends the answer to the message pool manager 4 which stores it in the message pool 9 as a message response. This message response comprises the field of the identifier of the providing device, which is "bob_phone" here. Optionally, it could also include an identifier of the original message.

At step 60, the message pool manager 4 transmits the message response to Bob's phone 6. Then, Bob's phone sends the message response through the mobile network in a conventional manner and removes the message response from the message pool 9.

While in the represented embodiment, the message type is a SMS, it could also be an email or an instant message, or even a simple notification such as an incoming call, where, if it has audio input/output capabilities, the rendering device 8 could pick up the call and connect the caller and the recipient.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, the invention may be advantageously implemented outside the home network in an external network such as Internet.

## Claims

1. Method of exporting a message intended for a user, from a providing device (6; 14) to a rendering device (8; 16), wherein the providing (6; 14) and the rendering devices (8; 16) are connected to a message pool manager (4; 18), said method comprising :
- receiving (52) by the message pool manager (4; 18) said message from the providing device (6; 14);
- storing (52) said message in a message pool (9; 20);
- transmitting (54) said message from the message pool manager (4;18) to the rendering device (8; 16) further to a request from the rendering device (8; 16) when said rendering device (8; 16) is in a perception range of the user.

2. Method of claim 1, wherein the reception (52) of the message by the message pool manager (4; 18) and the transmission (54) of said message to the rendering device (8; 16) are performed in an asynchronous manner.

3. Method of claim 1 or 2, comprising rendering (56) the message on a user interface of said rendering device (8; 16).

4. Method of claim 3, wherein the message is rendered at a time determined by said rendering device (8; 16).

5. Method of claim 3 or 4, wherein the message is rendered by the rendering device (8; 16) according to a display format determined by said rendering device (8; 16).

6. Method of any of claims 1 to 5, comprising detecting, by the rendering device (8; 16), that said rendering device (8; 16) is in the perception range of the user.

7. Method of claim 6, wherein the rendering device (8; 16) is in the perception range of the user if the user is using said rendering device.

8. Method of claim 6 or 7, wherein the detection is performed by the rendering device (8;16) using at least one sensor.

9. Method of any one of claims 1 to 8, wherein the providing device (6; 14) is a mobile phone and the rendering device is a set-top box or a connected television.

10. Message pool manager (4; 18) operable to export a message intended for a user, from a providing device (6; 14) to a rendering device (8;16), wherein the providing (6; 14) and the rendering (8; 16) devices are connected to the message pool manager (4; 18), said message pool manager (4; 18) comprising :
- a reception module (22) operable to receive said message from the providing device (6; 14);
- a storage module (24) operable to store said message in a message pool (9; 20);
- a transmission module (26) operable to transmit said message from the message pool manager (4; 18) to the rendering device (8; 16) further to a request from the rendering device (8;16) when said rendering device (8; 16) is in a perception range of the user.

11. Message pool manager of claim 10, wherein said message pool manager (4) is centralized in one device.

12. Message pool manager of claim 10, wherein said message pool manager (18) is distributed over a plurality of devices.

13. Rendering device (8; 16) operable to render a message intended for a user, comprising :
- a detection module (30) operable to detect that said rendering device (8; 16) is in a perception range of the user;
- a requesting module (32) operable to request the message from a message pool manager (4; 18) storing said message in a message pool (9; 20);
- a reception module (34) operable to receive said message; and
- a rendering module (36) operable to render the message.

14. Rendering device of claim 13, comprising an input module (38) enabling the user to answer to the message.

15. A computer-readable program comprising computer-executable instructions to enable a computer to perform the method of any one of claims 1 to 9.
